(19) Europäisches Patentamt
European Patent Office
Office européen des brevets

(11) Veröffentlichungsnummer: **0 267 180**
**A2**

# (12) EUROPÄISCHE PATENTANMELDUNG

(21) Anmeldenummer: **87890245.1**

(22) Anmeldetag: **04.11.87**

(51) Int. Cl.4: **C 01 G 17/00**
C 22 B 3/00

(30) Priorität: **07.11.86 AT 2979/86**

(43) Veröffentlichungstag der Anmeldung:
**11.05.88 Patentblatt 88/19**

(84) Benannte Vertragsstaaten:
**BE DE ES FR GB IT**

(71) Anmelder: **Bleiberger Bergwerks Union**
**Radetzkystrasse 2**
**A-9020 Klagenfurt (AT)**

(72) Erfinder: **Bart Dipl.Ing. Hans-Jorg**
**Papiermuhlgasse 33**
**A 8020 Graz (AT)**

**Marr, Prof.Dipl.Ing.Dr,Rolf**
**Neue Welt-Hohe 33**
**AT 8042 Graz (AT)**

**Stietka Dipl.Ing.Walther**
**Pierlstrasse 17**
**A 9020 Klagenfurt (AT)**

(74) Vertreter: **Collin, Hans, Dipl.-Ing. Dr. et al**
**Patentanwälte Dipl.-Ing. Dr. Hans Collin Dipl.-Ing. Erwin Buresch Dipl.-Ing. Dr. Helmut Wildhack Dipl.-Ing. Armin Häupl Mariahilfer Strasse 50**
**A-1070 Wien (AT)**

## (54) Extraktionsmittel sowie seine Verwendung in einem Verfahren zur Aufarbeitung von Ge-hältigen wässerigen Lösungen durch Flüssig/Flüssgextraktion.

(57) Es wird ein Extraktionsmittel zur Flüssig/Flüssigestraktion, insbesondere zur Aufarbeitung von niedrig konzentrierten wässerigen Germaniumlösungen, vorgeschlagen, das ein Gemisch aus mindestens einem substituierten 8-Hydroxychinolin und mindestens einem substituierten α-Hydroxyoxim, insbesondere ein 7-Alkenyl-8-hydroxychinolin zusammen mit einem 5,8-Diäthyl-7-hydroxy-dodecan-6-on-oxim, ist, in welchem der Anteil an 8-Hydroxychinolin den Anteil an α-Hydroxyoxim übersteigt, wobei vorzugsweise ein Volumsverhältnis von 8-Hydroxychinolin zu α-Hydroxyoxim in Bereich von 2 bis 20 vorliegt, und wobei das Gemisch vorzugsweise weiterhin einen organischen Verdünner und gegebenenfalls einen organischen Lösungsvermittler enthält. Dementsprechend wird dieses Extraktionsmittel insbesondere bei einem Verfahren zur Aufarbeitung von Ge-hältigen wässerigen Lösungen durch Flüssig/Flüssigextraktion, bei dem man die wässerigen Lösungen mit einer organischen Phase, die als Extraktionsmittel mindestens ein substituiertes 8-Hydroxychinolin und mindestens ein substituiertes α-Hydroxyoxim, insbesondere ein 7-Alkenyl-8-hydroxychinolin und ein 5,8-Diäthyl-7-hydroxydodecan-6-on-oxim, gegebenenfalls zusammen mit einem organischen Verdünner, enthält, extrahiert, den beladenen organischen Extrakt mit basischen, wässerigen Lösungen reextrahiert sowie den beladenen wässerigen Reextrakt zum Erhalt von Germanium und/oder dessen Verbindungen aufarbeitet, wobei die organische Phase nach Regenerierung durch Säurezusatz im Kreislauf geführt wird, eingesetzt.

FIG. 1

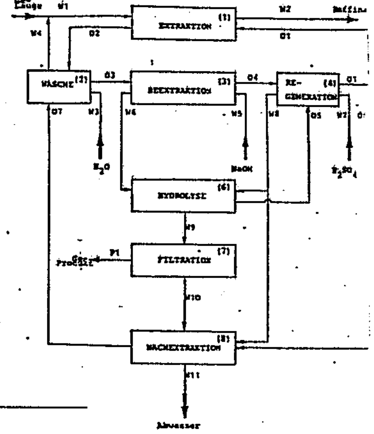


Abb.2: Fließ-Schema der extraktiven Aufarbeitung niedrig konzentrierter Germaniumwässer



Bundesdruckerei Berlin

**Beschreibung**

Extraktionsmittel sowie seine Verwendung in einem Verfahren zur Aufarbeitung von Ge-hältigen wässerigen Lösungen durch Flüssig/Flüssigextraktion

Die Erfindung betrifft ein Extraktionsmittel sowie seine Verwendung in einem Verfahren zur Aufarbeitung von Ge-hältigen wässerigen Lösungen durch Flüssig/Flüssigextraktion, bei dem man die wässerigen Lösungen mit einer organischen Phase, die als Extraktionsmittel mindestens ein substituiertes 8-Hydroxychinolin und mindestens eine substituiertes α-Hydroxyoxim, insbesondere ein 7-Alkenyl-8-hydroxychinolin und ein 5,8-Diäthyl-7-hydroxydodecan-6-on-oxim, gegebenenfalls zusammen mit einem organischen Verdünner, enthält, extrahiert, den beladenen organischen Extrakt mit basischen wässerigen Lösungen reextrahiert sowie den beladenen wässerigen Reextrakt zum Erhalt von Germanium und/oder dessen Verbindungen aufarbeitet, wobei die organische Phase nach Regenerierung durch Säurezusatz im Kreislauf geführt wird.

Verfahren zur selektiven Flässig/Flüssigextraktion von Germanium aus sauren wässerigen Lösungen unter Verwendung von organischen, mit Wasser nicht mischbaren Extraktionsmitteln, gegebenenfalls in Verdünnung mit organischen Lösungsmitteln, sind mehrfach bekannt geworden.

So beschreiben die E-PS 0 046 437 und die E-AS 0 068 541 derartige Verfahren, bei denen als selektives Extraktionsmittel substituierte 8-Hydroxychinoline eingesetzt werden; gemäß der US-PS 3 883 634 und der äquivalenten DE-OS 24 23 355 werden für diese Zwecke Hydroxyoxime eingesetzt.

In der E-AS 0 068 540 ist der kombinierte Einsatz von α-Hydroxyoximen und substituierten Hydroxychinolinen für diesen Zweck beschrieben, insbesondere von 5,8-Diäthyl-7-hydroxydodecan-6-on-oxim kombiniert mit 7-Alkenyl-8-hydroxychinolinen. Gemäß dieser Druckschrift wurde gefunden, daß ein synergistischer Extraktionseffekt auftritt, wenn man dem α-Hydroxyoxim als Hauptbestandteil eine kleine Menge 8-Hydroxychinolin zusetzt, wobei ein Volumsverhältnis von 99 % α-Hydroxyoxim zu 1 % 8-Hydroxychinolin angegeben ist. Weiterhin ist angegeben, daß, obwohl dieser synergistische Effekt, der bei einem Zusatz von 0,5 Vol.-% 8-Hydroxychinolin besonders ausgeprägt ist, sich auch bis über einen Zusatz von 5 Vol.-% fortsetzt, nicht empfohlen wird, mehr als 5 Vol.-% 8-Hydroxychinolin zuzusetzen, da bei derartigen Mischungen es sehr schwierig wird, das Germanium aus diesen organischem Mischungen zu reextrahieren.

Entgegen dieser Auffassung wurde nunmehr gefunden, daß Gemische aus diesen Extraktionsmitteln dann mit hervorragenden Ergebnissen eingesetzt werden können, wenn sie als Hauptbestandteil ein 8-Hydroxychinolin und eine geringere Menge α-Hydroxyoxim enthalten.

Demgemäß ist das erfindungsgemäße Extraktionsmittel vor allem dadurch gekennzeichnet, daß es ein Gemisch aus mindestens einem substituierten 8-Hydroxychinolin und mindestens einem substituierten α-Hydroxyoxim, insbesondere ein 7-Alkenyl-8-hydroxychinolin zusammen mit einem 5,8-Diäthyl-7-hydroxydodecan-6-on-oxim, ist, in welchem der Anteil an 8-Hydroxychinolin den Anteil an α-Hydroxyoxim übersteigt, wobei vorzugsweise ein Volumsverhältnis von 8-Hydroxychinolin zu α-Hydroxyoxim im Bereich von 2 bis 20 vorliegt, und wobei das Gemisch vorzugsweise weiterhin einen organischen Verdünner und gegebenenfalls einen organischen Lösungsvermittler enthält.

Diese Gemische eignen sich insbesondere hervorragend zu Extraktion von stark verdünnten Germaniumlösungen, besonders solchen, in denen die Germaniumkonzentration unter etwa 1,5 g/l, z.B. bei etwa 0,2 g/l, liegt. Weiterhin ist es z.B. möglich, damit Indium und Gallium selektiv zu extrahieren.

Es wurde gefunden, daß bei Einsatz der erfindungsgemäßen Gemische im Vergleich zu den bekannten Extraktionsmittelgemischen eine weitaus geringere Menge dieser Substanzen in der organischen Extraktionsmittelphase nötig ist. So ist ein Anteil von maximal 15 Vol.-% Extraktionsmittel in der Extraktionsmittelphase völlig ausreichend.

Insbesondere liegt das 8-Hydroxychinolin in einem Volumsanteil von 1 bis 10 % und das α-Hydroxyoxim in einem Volumnsanteil von 0,5 bis 5 % in der Extraktionsmittelphase vor, der Rest ist ein organisches Verdünnungsmittel, gegebenenfalls zusammen mit einem Lösungsvermittler.

Der Einsatz von organischen Verdünnungsmitteln ist in den zum Stand der Technik angeführten Druckschriften beschrieben. Im vorliegenden werden als Verdünnungsmittel vor allem technische Erdölschnitte verwendet, die geeigneten Flammpunkt und Siedebereich haben. Die Verdünnungsmittel können dabi entweder Aliphaten sein, wie z.B. Shellsol T mit weniger als 0,5 % Aromatengehalt, oder Aromaten, wie z.B. Shellsol AB, mit mindestens 99,5 % Aromatengehalt. Sehr häufig werden auch Mischungen verwendet, wie z.B. Shellsol K, welches max. 3 % Aromaten und sonst Naphthene und Aliphaten enthält.

Ebenso ist sowohl beim Einsatz von 8-Hydroxychinolinen als auch beim Einsatz von α-Hydroxoximen bekannt, der Extraktionsmittelphase organische Lösungsvermittler zuzusetzen, z.B. längerkettige Alkohole. Diese Lösungsvermittler verbessern die hydrodynamischen Extraktionsparameter, sie beeinflussen z.B. das Absetzverhalten, die Emulsionsneigung und die Aufspaltung der organischen Phase. Im vorliegenden wird vorteilhaft ein Lösungsvermittleranteil von 1 bis 20 Vol.-%, bezogen auf die Extraktionsmittelphase, eingesetzt und vorzugsweise Isodecanol oder Isotridecylalkohol verwendet.

Im folgenden wird der Vorteil der erfindungsgemäßen Extraktionsmittelmischung im Vergleich zum Stand der Technik unter Bezugnahme auf Fig. 1 der Zeichnung näher erläutert, in der die Ge-Extraktionsgleichgewichte für verschiedene Extraktionsmittel gegenüber einer wässerigen Lösung dargestellt sind. Alle Gleichgewichte wurden bei 20°C bestimmt.

Kurve I ist das Ergebnis eines Versuchs mit einer Extraktionsmittelphase aus 50 Vol.-% 5,8-Diäthyl-7-hydroxydodecan-6-on-oxim (LIX 63) und 50 Vol.-% Shellsol AB entsprechend Beispiel 1 der DE-OS 24 23 355 und der US-PS 3 883 634, sowie enthaltend 70 g/l $H_2SO_4$.

Man erkennt, daß das Gleichgewicht in der gewählten Darstellungsart stark auf der Seite der wässerigen Lösung liegt; bei einem Germaniumangebot von 200 ppm liegt die maximale Beladbarkeit der Extraktionsmittelphase bei etwa 800 ppm.

Dies bedeutet, daß im Verhältnis zum Extraktionsmittel wenig Germanium in der organischen Extraktionsmittelphase transportiert wird. Dies bedingt wirtschaftlich gesehen sehr hohe spezifische Kosten bei der Befüllung der Anlage mit teurer Extraktionsmittelphase und hohe Betriebskosten beim regelmäßigen Lösungsmittel "make-up", da die organische Extraktionsmittelphase mit steigendem Extraktionsmittelanteil teurer wird. Zusätzlich erhöhen sich die spezifischen Hilfschemikalienverbrauche (wie NaOH und $H_2SO_4$), die proportional dem Extraktionsmittelanteil steigen.

Kurve II ist das Ergebnis eines Versuchs mit einer Extraktionsmittelphase aus 7 Vol.-% eines 7-Alkenyl-8-hydroxychinolins (LIX 26) und 93 Vol.-% Shellsol AB, sowie enthaltend 70 g/l $H_2SO_4$. Dies entspricht der Offenbarung in den E-A 0 046 437 und 0 068 541.

Man erkennt, daß gegenüber Kurve I die organische Phase doppelt so hoch mit Germanium beladbar ist, was die Kosten und Verbrauche entsprechend herabsetzt.

Kurve III ist das Ergebnis eines Versuchs mit einer Extraktionsmittelphase aus 7 Vol.-% 7-Alkenyl-8-hydroxychinolin (LIX 26), 3 Vol.-% 5,8-Diäthyl-7-hydroxydodecan-6-on-oxim (LIX 63), mithin eine erfindungsgemäße Extraktionsmittelmischung,und 90 Vol.-% Shellsol K, sowie enthaltend 70 g/l $H_2SO_4$.

Man erkannt die gegenüber Kurve II weitaus stärkere Beladbarkeit der organischen Phase.

Kurve IV ist das Ergebnis eines Versuchs mit einer Extraktionsmittelphase aus 40 Vol.-% 5,8-Diäthyl-7-hydroxydodecan-6-on-oxim (LIX 36), 10 Vol.-% 7-Alkenyl-8-hydroxychinolin (LIX 26) und 50 Vol.-% Shellsol AB, sowie enthaltend 70 g/l $H_2SO_4$. Dies entspricht dem Vorschlag gemäß der E-A 0 068 540, nämlich das α-Hydroxyoxim als Hauptbestandteil und das 8-Hydroxychinolin als kleineren Bestandteil der Extraktionsmittelmischung einzusetzen.

Man erkennt, daß man hier, verglichen mit dem erfindungsgemäßen Ansatz, die 5-fache Extractionsmittelmenge (50 Vol.-% gegenüber 10 Vol.-%) benötigt, um zu etwa gleichen Ergebnissen zu gelangen.

Kurve V ist das Ergebnis eines Versuchs mit einer Extraktionsmittelphase aus 7 Vol-% 7-Alkenyl-8-hydroxychinolin (LIX 26), 3 % 5,8-Diäthyl-7-hydroxydodecan-6-on-oxim (LIX 63), 15 Vol.-% Isodecanol (Lösungsvermittler) und 75 Vol.-% Shellsol T, sowie enthaltend 55 g/l $H_2SO_4$. Es handelt sich somit um einen optimierten erfindungsgemäßen Ansatz nach Kurve III.

Man erkennt die wiederum erfindungsgemäß wesentlich gesteigerte Beladbarkeit der organischen Phase mit all den sich daraus ergebenden Vorteilen am Beispiel niedrig konzentrierter wässeriger Germaniumlösungen.

Wenn die erfindungsgemäßen Extraktionsmittelmischungen in einem Verfahren zur Aufarbeitung von Ge-hältigen wässerigen Lösungen durch Flüssig/Flüssig extraktion, bei dem man die wässerigen Lösungen mit einer organischen Phase, die als Extraktionsmittel mindestens ein substituiertes 8-Hydroxychinolin und mindestens ein substituiertes α-Hydroxyoxim, insbesondere ein 7-Alkenyl-8-hydroxychinolin und ein 5,8-Diäthyl-7-hyroxydodecan-6-on-oxim, gegenbenenfalls zusammen mit einem organischen Verdünner, enthält, extrahiert, den beladenen organischen Extrakt mit basischen, wässerigen Lösungen reextrahiert sowie den beladenen wässerigen Reextrakt zum Erhalt von Germanium und/oder dessen Verbindungen aufarbeitet, wobei die organische Phase nach Regenerierung durch Säurezusatz im Kreislauf geführt wird, eingesetzt werden, ist dieses Verfahren vor allem dadurch gekennzeichnet, daß eine organische Phase eingesetzt wird, in der der Anteil an 8-Hydroxychinolin den Anteil an α-Hydroxyoxim übersteigt, wobei vorzugsweise ein Volumsverhältnis von 8-Hydroxychinolin zu α-Hydroxyoxim im Bereich von 2 bis 20 vorliegt.

Insbesondere werden erfindungsgemäß wässerige Lösungen extrahiert, die maximal 1,5 g/l Germanium und mindestens 0,5 mol/l Säure enthalten.

Ein weiteres Kennzeichen des erfindungsgemäßen Verfahrens besteht darin, daß im beladenen wässerigen Reextrakt die Hauptmenge des Germaniumgehalts durch saure Hydrolyse ausgefällt und abgetrennt und der so verarmte wässerige Reextrakt erneut mit organischer Phase extrahiert wird, wobei der erhaltene organische Zweitextrakt vorzugsweise mit dem beladenen organischen Extrakt vor dessen Reextraktion vereinigt wird.

Vorteilhaft werden beim erfindungsgemäßen Verfahren die Extraktionsmittel im Gegensatz zum Beispiel der E-A 0 068 540 nicht im unverdünnten Zustand, sondern in entsprechender Verdünnung eingesetzt, da die eingesetzten Extraktionsmittel selbst eine hohe Viskosität aufweisen, die hydrodynamische Probleme mit sich bringen kann.

Das erfindungsgemäße Verfahren wird im folgenden an Hand von Ausführungsbeispielen unter Bezugnahme auf Fig. 2 näher erläutert, die ein schematisches Fließbild zeigt.

Es wird dazu die leicht saure, germaniumhältige wässerige Phase W1 in der Extraktionsstufe 1 mit der organischen Extraktionsmittelphase 01 kontaktiert. Die saure, germaniumhältige Phase sollte mindestens 0,5 mol/l Säure und vorzugsweise z.B. zwischen 45 und 100 g/l $H_2SO_4$ enthalten. Andere metallische und nichtmetallische Ionen können in verschiedener Konzentration enthalten sein. Hier erfolgt ein Stoffübergang laut Gl.(1).

$$Ge(OH)^{3+} + HSO_4^- + 3\,\overline{H.Ex} \rightleftharpoons \overline{Ge(Ex)_3.HSO_4} + H_2O + 2\,H^+ \qquad (1)$$

Ex steht für Extraktionsmittel.

Das Germanium befindet sich nun im organischen Extrakt 02, zusammen mit einem Anteil an Schwefelsäure. Der Extrakt 02 und die abgereicherte wässerige Phase W2 verlassen nach Phasentrennung diese Stufe.

Der Extrakt 02 wird nun in einer Waschstufe 2 von mitgeschleppter Säure und von anderen Verunreinigungen (Zn, Fe, etc.) durch eine einfache Wasserwäsche gereinigt. Die geringe Waschwassermenge W3 ist danach W4 mit Säure und kleinen Metallmengen (Germanium, Zink, etc.) verunreinigt und wird am besten wieder dem Germaniumzulaufstrom W1 zugeführt.

Der so gereinigte Extrakt 03 wird nun einer Abstreifoperation 3 zugeführt. Hier wird Germanium mit alkalischer Abstreiflösung W5 aus dem organischen Extrakt rückextrahiert.

Die alkalische Abstreiflösung kann eine Natriumkarbonatlösung oder Ammoniaklösung oder vorzugsweise eine Natronlaugelösung sein. Der Gehalt an Natrium in W5 liegt dabei im Bereich von 3 bis 8 mol/l. Die Abstreifoperation wird vorzugsweise bei erhöhter Temperatur, d.h. zwischen 40 und 60°C ausgeführt. Dies verbessert die Gleichgewichtslage und Kinetik der Abstreifoperation sowie hydrodynamische Parameter.

Bei der Abstreifoperation kann Germanium im wässerigen Reextrakt W6 laut Gl.(2) angereichert werden.

$$\overline{Ge(Ex)_3 \cdot HSO_4} + 7NaOH \rightleftharpoons 3\overline{Na.Ex} + Na_2SO_4 + H_2Na_2GeO_4 + 3\,H_2O \qquad (2)$$

Der mit Natrium beladene abgereicherte organische Extrakt 04 wird für die Wiederverwendung bei der Extraktionsstufe 1 umgesalzen. Dies geschieht im Regenerationsschritt 4 mit Säure, vorzugsweise mit Schwefelsäure W7 entsprechend Gl.(3).

$$2\,\overline{NaEx} + H_2SO_4 \rightleftharpoons 2\,\overline{H.Ex} + Na_2SO_4 \qquad (3)$$

Der Gehalt an Schwefelsäure in der Regenerationslösung W7 ist im Bereich zwischen 50 und 200 g/l gelegen. Die Operation wird wieder bei Umgebungstemperatur durchgeführt.

Die so regenerierte organische Extraktionsmittelphase kommt anschließend in den Vorratstank 5. Die bei der Aufarbeitung der organischen Extraktionsmittelphase erhaltenen Lösungen W6 und W8 werden im Fällbehälter 6 vereinigt.

Es wird dabei Säure W8 vorgelegt und germaniumhältige Lauge W6 bis zu einem pH-Wert von ca. 6 zudosiert. Dies dient zum Aussalzen von gelöstem Extraktionsmittel.

In Stufe 3 löst sich ein geringer Prozentsatz an Extraktionsmittel in der stark alkalischen Abstreiflösung W6. Dies ist an der charakteristischen Farbänderung zwischen W5 und W6 von farblos nach dunkelbraun bis schwarzbraun erkenntlich. Im sauren Milieu kann diese Löslichkeit rückgängig gemacht werden. Bei einem pH-Wert von ca. 6 ist dieser Vorgang abgeschlossen und das ausgesalzte Extraktionsmittel 05 kann von der verbleibenden wässerigen Phase abgezogen und dem Mischer 4 zugeführt werden.

Das Germanium aus dem wässerigen Reextrakt wird durch Hydrolyse erhalten. Bei weiterem Zudosieren von W6 bis zu einem pH-Wert von 9,5 fällt festes Germaniumprodukt aus (W9).

Nach einer Filtration 7 erhälbt man ein festes Germaniumprodukt P1 und eine Filterlauge W10, die noch ca. 1 g/l Germanium enthält, die der Eigenlöslichkeit des Niederschlages entspricht.

Zur Ausbringung des verbleibenden Germaniums wird die Filterlauge W10 mit Säure W8 auf Extraktionsbedingungen gebracht. Dies entspricht einem Säuregehalt, am Beispiel Schwefelsäure, zwischen 45 und 100 g/l.

Aus dem Vorratstank 5 wird eine Teilmenge 06 an organischer Extraktionsmittelphase für die Extraktion 8 des verbliebenen Germaniums der nun sauren Filterlauge W10 verwendet. Das Raffinat W11 nach der Extraktion 8 ist germaniumfrei und ist im wesentlichen nur mehr eine schwach saure $Na_2SO_4$-Lösung, die bedenkenlos einer Abwasserneutralisation zugeführt werden kann.

Der nun mit Germanium beladene organische Zweitextrakt 07 wird vor oder in der Wäsche 2 mit dem Hauptteil des beladenen organischen Erstextrakts 02 vereinigt.

Das erfindungsgemäße Aufarbeitungsschema erlaubt eine in sich geschlossene Germaniumgewinnung. Das Germanium wird dabei aus niedrig konzentrierten Wässern extraktiv aufgearbeitet und aufkonzentriert. Als Abwassermenge fällt eine natriumsulfatsaure Lösung an, die sich aus dem Volumen an Abstreif- und Umsalzphase minus dem Volumen des Germaniumproduktes ergibt.

Durch die erfindungsgemäße Extraktionsmittelmischung ist es möglich, germaniumarme Wässer

aufzuarbeiten. Germaniumgehalte sind dabei maximal 1,5 g/l, aber üblicherweise ca. 0,2 g/l bei einem Säuregehalt zwischen 0,5 und 1 mol/l, am Beispiel Schwefelsäure üblicherweise 55 g/l/ Die ionischen und nicht-ionischen Begleitmetalle sind in verschiedener Konzentration vorhanden, üblicherweise am Beispiel Zink mit 100 g/l.

Es können problemlos Aufkonzentrierungen um den Faktur 300 auf 25 bis 60 g/l Germanium im alkalischen Reextrakt erzielt werden. Durch Hydrolyse läßt sich daraus ein Germaniumkonzentrat gewinnen, das mindestens 35 %ig an Germanium ist und ansonsten im wesentlichen nur $Na_2SO_4$ und $Na_2CO_3$ enthält.

Das erfindungsgemäße Verfahren paßt die organische Extrahierlösung an den niedrigen Germaniumvorlauf an. Durch die hohe Aufkonzentrierung an Germanium im organischen Extrakt fallen pro kg gewonnenem Germanium sehr niedrige Säure- und Laugekosten zur Regenerierung der organischen Extraktionsmittelphase an. Im selben Ausmaß verringert sich auch die Abwassermenge aus der Anlage, die durch Neutralisation von Säure und Lauge im Hydrolyseschritt anfällt.

Beispiel 1:

Die saure Germaniumeinsatzlösung enthält in g/l: 0,314 Ge, 57 $H_2SO_4$, 3 Na, 0,515 Cl, 0,175 F, 2,45 Cd, 109 Zn, 1,05 Fe, 0,024 Pb.

Die organische Extraktionsmittelphase enthält 7 Volumsteile LIX 26 und 3 Volumsteile LIX63 sowie 10 Volumsteile Isodekanol in Shellsol K.

Die Extraktion erfolgt in einem SHE-Zweiphasenstromapparat (EP 0048239) bei 18°C. Die aktive Stoffaustauschhöhe ist 8 m. Das Phasenverhältnis von organischer zu wässeriger Phase beträgt 1:10.

Die an Germanium verarmte wässerige Phase verläßt den Apparat mit, in g/l:
0,015 Ge, 67 $H_2SO_4$, 4 Na, 0,35 Cl, 0,115 F, 2,15 Cd, 108 Zn, 1,049 Fe und 0,026 Pb.

Der organische Extrakt ist mit 3,1 g/l Germanium beladen und kommt nun in einen Waschmischer. Hier werden 20 Teile organischer Phase mit einem Teil Wasser gewaschen. Das Waschwasser enthält dann in g/l: 0,034 Ge, 7 $H_2SO_4$, 0,5 Na, 3,0 Cl, 1,85 F, 6 Cd, 18 Zn, 0,022 Fe, 0,001 Pb.

Die Waschwassermenge wird der Germaniumeinsatzlösung zugeführt.

Germanium wird nun mit 4 mol/l NaOH aus dem organischen Extrakt rückextrahiert. Dies geschieht in zwei Reextraktionsmischern bei 50°C im Gegenstrom. Es werden dabei 5 Teile Extrakt mit einem Teil alkalischer Abstreiflösung behandelt. Ein Liter organischer Extrakt verbraucht dabei 0,2 mol NaOH. Der abgestreifte organische Extrakt enthält dann nur mehr 0,11 g/l Ge und der wässerige Reextrakt ist auf 14,95 g/l Ge angereichert, wobei die Gesamtmenge an Verunreinigungen (Cl, F, Zn, Cd, etc.) kleiner als 0,05 g/l ist.

Im nächsten Schritt wird der abgestreifte organische Extrakt mit 150 g/l $H_2SO_4$ in einem Regenerationsmischer umgesalzt. Das Phasenverhältnis von organischer zu wässeriger Phase ist dabei 5:1. Die so regenerierte organische Extraktionsmittelphase kommt wider zum Einsatz in der ersten - der Extraktionsstufe -.

Die anfallende saure Umsalzlösung wird zur weiteren Produktaufarbeitung herangezogen. Es wird dabei solange alkalische, an Germanium angereicherte Abstreiflösung (Reextrakt) eingeleitet, bis ein pH-Wert von 6 bis 6,5 erreicht wird. Dabei entmischt sich das in der alkalischen Lösung vorhandene Extraktionsmittel und wird in den Prozeß rückgeführt. Die alkalische Lösung enthält ca. 1,4 % gelöstes Extraktionsmittel, das dabei wiedergewonnen wird.

Im weiteren wird diese Lösung mit einer geringen Menge an Abstreiflösung auf einen pH-Wert von 9,5 gebracht. Hier hydrolysiert Germanium. Der entstehende Niederschlag kann abfiltriert werden und enthält 32,7 % Germanium auf das Trockengewicht bezogen.

Die verbleibende Filterlösung enthält noch 0,95 g/l gelöstes Germanium, entsprechend der Eigenlöslichkeit des Niederschlages.

Die Aufarbeitung des Niederschlages erfolgt wiederum extraktiv, wobei die Fäll-Lösung mittels saurer Regenerationslösung auf einen $H_2SO_4$-Gehalt von 70 g/l gebracht wird. Die Extraktion wird diskontinuierlich betrieben. Ein Teil der Gesamtmenger an Extrahierphase wird hiezu verwendet. In zwei Stufen werden jeweils 10 Teile saurer wässeriger Phase mit je einem Teil an organischer Phase behandelt. Das verbleibende saure Wasser ist weitestgehend germaniumfrei (d.h. weniger als 0,02 g/l Ge) und kann einer Abwasserneutralisation zugeführt werden.

Die vereinigten organischen Phasenmengen dieser Operation sind mit 2,25 g/l Ge beladen. Diese organische, germaniumhältige Extrahierlösung wird wieder der Hauptmenge des beladenen organischen Extrakts zugeführt und anschließend gewaschen, reextrahiert und regeneriert, wie es für die Hauptmenge der organischen Phase oben beschrieben ist.

Beispiel 2:

Die saure Germaniumeinsatzlösung enthält in g/l: 0,218 Ge, 55 $H_2SO_4$, 3,5 Na, 0,312 Cl, 0,120 F, 2,83 Cd, 109 Zn, 1,20 Fe.

Die organische Extraktionsmittelphase enthält 7 Teile LIX26 und 3 Teile LIX63 sowie 15 Teile Tridekanol in Shellsol T.

Die Extraktion erfolgt in einem zweistufigen Extraktionsmischer bei 20°C. Das Phasenverhältnis von organischer zu wässeriger Phase beträgt 1:19. Die an Germanium verarmte Phase verläßt den Apparat mit 0,008 g/l Germanium und der Extrakt ist mit 3,99 g/l Ge beladen.

20 Teile an organischem Extrakt werden mit einem Teil Wasser gewaschen. Der gewaschene Extrakt wird mit 6 n NaOH in zwei Reextraktionsmischern bei 40°C von Germanium befreit. Das Phasenverhältnis von

Extrakt zu Abstreiflösung beträgt 8:1. Die alkalische Abstreiflösung enthält 31,9 g/l Germanium, das der Hydrolyse zugeführt wird.

Vor erneutem Einsatz des abgestreiften organischen Extrakts wird dieser mit 3 molarer Schwefelsäure in einem Phasenverhältnis organisch zu wässerig gleich 5 regeneriert. Das Regenerat wird dann, wie in Beispiel 1 beschrieben, zur hydrolytischen Produktgewinnung herangezogen.

Beispiel 3:

Das Beispiel 3 ist ähnlich dem Beispiel 2, nur daß bei der Abstreifoperation drei statt zwei Reextraktionsmischer verwendet werden. Die Temperatur beträgt dabei 50°C und die Abstreifphase enthält 7 n NaOH. Das Phasenverhältnis an wässeriger zu organischer Phase beträgt 1:16. Der Reextrakt enthält dann 60 g/l Germanium. Gegenüber Beispiel 2 muß mengenmäßig nur halb so viel an Abstreiflösung aufgearbeitet werden, da die Germaniumkonzentration sich in dieser Lösung ca. verdoppelt hat.

Beispiel 4:

Die saure Sulfatlösung enthält in g/l: 0,286 Ge, 64 $H_2SO_4$, 2,7 Na, 0,285 Cl, 153 F, 1,86 Cd, 107 Zn, 1,41 Fe.

Die organische Extraktionsphase enthält 7 Teile Kelex 100 und 3 Teile LIX63 sowie 10 % Tridekanol in Shellsol K.

Die Extraktion erfolgt in einem zweistufigen Extraktionsmischer bei 20 °C. Das Phasenverhältnis von organischer zu wäßriger Phase beträgt 1:20. Die an Germanium verarmte Phase verläßt den Apparat mit 0,005 g/l Germanium und der organische Extrakt ist mit 5,7 g/l Germanium beladen.

Der Extrakt wird in einem einstufigen alkalischen (240 g/l NaOH) Reextraktionsmischer bei 45 °C reextrahiert. Die Konzentration an Germanium ist 45,6 g/l Ge. Der Anreicherungsfaktor ist demnach 162 bezüglich der sauren Germaniumlösung.

Beispiel 5:

Die saure Sulfatlösung enthält in g/l: 0,173 Ge, 53 $H_2SO_4$, 4,8 Na, 0,715 Cl, 0,212 F, 4,13 Cd, 105 Zn, 2,3 Fe, 0,031 Pb.

Die organische Extrahierphase enthält 5 % Kelex 108 und 1,5 % LIX63 mit 10 % Isodekanol in Shellsol K.

Die Extraktion erfolgt in einem einstufigen Extraktionsmischer. Das Phasenverhältnis von organischer zu wäßriger Phase beträgt 1:6. Die an Germanium verarmte Phase verläßt den Apparat mit 15 ppm Ge und der organische Extrakt ist mit 0,79 g/l Ge beladen.

Der organische Extrakt wird in einem einstufigen alkalischen (90 g/l NaOH) Reextraktionsmischer bei 47 °C reextrahiert. Das wäßrige Konzentrat enthält dann 35,5 g/l Germanium. Der Anreicherungsfaktor ist demnach 45 bezüglich der sauren Germaniumlösung.

Das erfindungsgemäße Verfahren bietet folgende Vorteile:

1. Germanium kann sehr selektiv und kostengünstig aus dem ppm-Bereich von Begleitelementen im g/l-Bereich abgetrennt werden.
2. Germanium kann über den organischen Extrakt aus der Einsatzlösung bis zum Faktor 300 in der Abstreifphase (Reextrakt) angereichert werden.
3. Das erfindungsgemäße Verfahren paßt die organische Extraktionsmittelphase derart an den Germaniumvorlauf an, daß bei optimaler Germaniumabtrennung ein Minimum an Chemikalien für die Regeneration der organischen Extraktionsmittelphase notwendig wird.
4. Der erfindungsgemäße Prozeß ist in sich so geschlossen, daß nur eine geringe Menge an saurer Salzlösung als Abfall anfällt.
5. Als Produkt wird ein reines, mindestens 35 %iges Germaniumkonzentrat gewonnen.

**Patentansprüche**

1. Extraktionsmittel zur Flüssig/Flüssigextraktion, insbesondere zur Aufarbeitung von niedrig konzentrierten wässerigen Germaniumlösungen, in Form eines Gemisches aus mindestens einem substituierten 8-Hydroxychinolin und mindestens einem substituierten α-Hydroxyoxim, insbesondere ein 7-Alkenyl-8-hydroxychinolin zusammen mit einem 5,8-Diäthyl-7-hydroxy-dodecan-6-on-oxim, und wobei das Gemisch vorzugsweise weiterhin einen organischen Verdünner und gegebenenfalls einen organischen Lösungsvermittler enthält, dadurch gekennzeichnet, daß der Anteil an 8-Hydroxychinolin den Anteil an α-Hydroxyoxim übersteigt und daß vorzugsweise ein Volumsverhältnis von 8-Hydroxychinolin zu α-Hydroxyoxim im Bereich von 2 bis 20 vorliegt.

2. Extraktionsmittel nach Anspruch 1, dadurch gekennzeichnet, daß es 1 bis 10 Vol.-% 8-Hydroxychinolin enthält.

3. Extraktionsmittel nach Anspruch 1 oder 2, dadurch gekennzeichnet, daß es 0,5 bis 5 Vol.-% α-Hydroxyoxim enthält.

4. Extraktionsmittel nach einem der Ansprüche 1 bis 3, dadurch gekennzeichnet, daß es 1 bis 20 Vol.-% eines organischen Lösungsvermittlers, insbesondere mindestens einen höheren Alkohol, enthält.

5. Extraktionsmittel nach Anspruch 4, dadurch gekennzeichnet, daß es Isodecanol und/oder

Isotridecylalkohol enthält.

6. Verfahren zur Aufarbeitung von Ge-hältigen wässerigen Lösungen durch Flüssig/Flüssigextraktion, bei dem man die wässerigen Lösungen mit einer organischen Phase, die als Extraktionsmittel mindestens ein substituiertes 8-Hydroxychinolin und mindestens ein substituiertes α-Hydroxyoxim, insbesondere ein 7-Alkenyl-8-hydroxychinolin und ein 5,8-Diäthyl-7-hydroxydodecan-6-on-oxim, gegebenenfalls zusammen mit einem organischen Verdünner, enthält, extrahiert, den beladenen organischen Extrakt mit basischen, wässerigen Lösungen reextrahiert sowie den beladenen wässerigen Reextrakt zum Erhalt von Germanium und/oder dessen Verbindungen aufarbeitet, wobei die organische Phase nach Regenerierung durch Säurezusatz im Kreislauf geführt wird, dadurch gekennzeichnet, daß ein Extraktionsmittel nach einem der Ansprüche 1 bis 5 eingesetzt wird.

7. Verfahren nach Anspruch 6, dadurch gekennzeichnet, daß eine wässerige Lösung extrahiert wird, die maximal 1,5 g/l Germanium und mindestens 0,5 mol/l Säure enthält.

8. Verfahren nach Anspruch 6 oder 7, dadurch gekennzeichnet, daß im beladenen wässerigen Reextrakt die Hauptmenge de Germaniumgehalts durch saure Hydrolyse ausgefällt und abgetrennt und der so verarmte wässerige Reextrakt erneut mit organischer Phase extrahiert wird, wobei der erhaltene organische Zweitextrakt vorzugsweise mit dem beladenen organischen Extrakt vor dessen Reextraktion vereinigt wird.

0267180

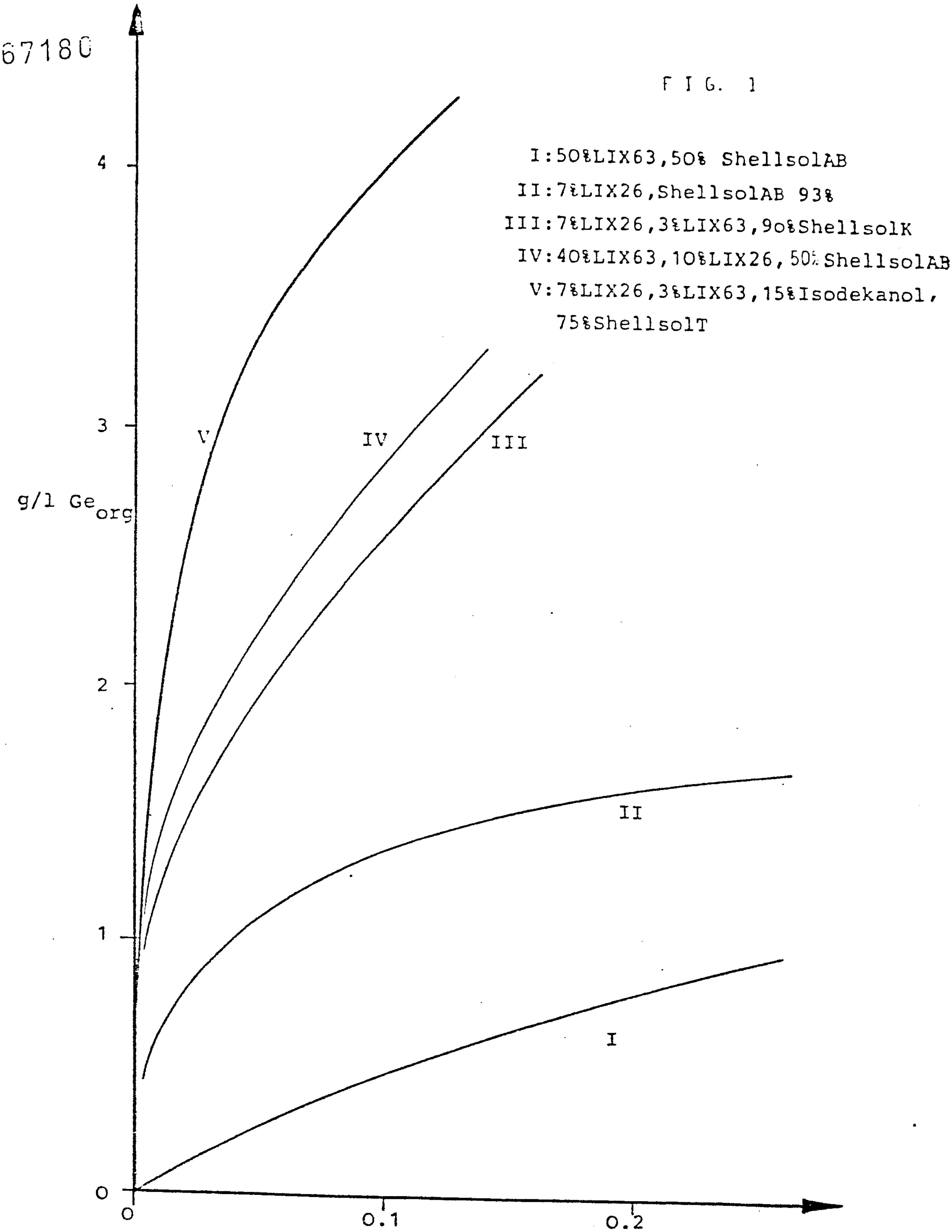


ABB.1: EXTRAKTIONSGLEICHGEWICHTE
($20^{O}C$, I÷IV mit 70g/l, V mit 55g/l $H_2SO_4$)

FIG. 2

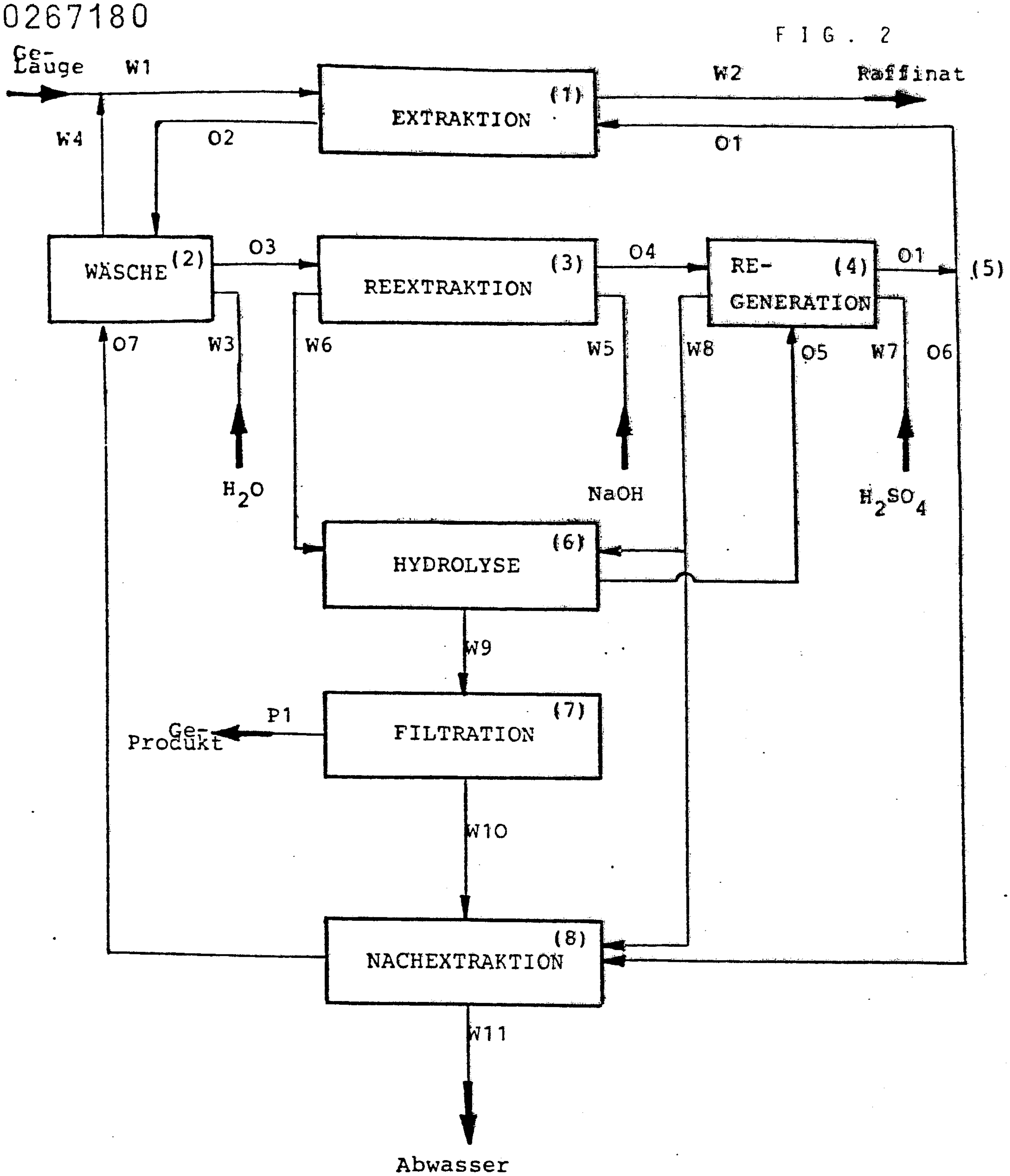


ABB.2: Fließ-Schema der extraktiven Aufarbeitung niedrig konzentrierter Germaniumwässer